# EUROPÄISCHE PATENTSCHRIFT

(11) **EP 2 562 414 B1**
(45) Veröffentlichungstag und Bekanntmachung des Hinweises auf die Patenterteilung: **24.01.2018**
(21) Anmeldenummer: 12004546.3
(22) Anmeldetag: 16.06.2012
(51) Int. Cl.: F03D 7/02

(54) **Verfahren zum Betreiben einer Windenergieanlage bei Auftreten eines Netzfehlers mit einem Spannungsrückgang sowie eine solche Windenergieanlage**
Method for operating a wind power assembly when a power failure occurs with a decrease in power and such a wind power assembly
Procédé de fonctionnement d'une éolienne lors de la survenue d'une erreur de réseau avec diminution de la tension ainsi qu'une telle éolienne

(30) Priorität: 20.08.2011 DE 102011111210
(43) Veröffentlichungstag der Anmeldung: 27.02.2013
(73) Patentinhaber: Nordex Energy GmbH, 22419 Hamburg (DE)
(72) Erfinder: Harms, Ulrich, 22399 Hamburg (DE); Laubrock, Malte, 22335 Hamburg (DE)
(74) Vertreter: Hauck Patentanwaltspartnerschaft mbB

(56) Entgegenhaltungen:
- WO-A1-2005/015012
- WO-A1-2006/069569
- US-A1- 2002 084 655

## Beschreibung

Die vorliegende Erfindung betrifft ein Verfahren zum Betreiben einer Windenergieanlage bei Auftreten eines Netzfehlers mit einem Spannungsrückgang, wobei die Windenergieanlage einen Rotor mit mindestens einem in seinem Blatteinstellwinkel verstellbaren Rotorblatt, einen mit dem Rotor verbundenen Generator zum Erzeugen einer elektrischen Leistung für ein elektrisches Versorgungsnetz sowie einen mit dem Generator und dem elektrischen Versorgungsnetz verbundenen Umrichter aufweist. Ferner betrifft die Erfindung eine solche Windenergieanlage mit einem Umrichter und einem Generator. WO 2006/069569 offenbart ein Verfahren zur Steuerung einer Windenergieanlage im Falle eines Netzfehlers.

Aus DE 10 2007 035 570 A1 ist ein Verfahren zum Betreiben eines doppelt gespeisten Asynchrongenerators bekannt geworden, bei dem der Stator an ein Energieversorgungsnetz angeschlossen ist. Der Rotor wird über den Triebstrang der Windenergieanlage betrieben. Der Rotor ist über einen maschinenseitigen und einen netzseitigen Umrichter elektrisch an das Energieversorgungsnetz gekoppelt. Bei Erkennen von Kurzschlussströmen im Netz wird der aktuell vorhandene Istwert des maschinenseitigen Rotorstroms erfasst, eingefroren und anstelle der ausgewählten Sollwerte für die Regelung des maschinenseitigen Rotorstroms verwendet.

Aus WO 2009/083447 A2 ist eine Windenergieanlage und ein Verfahren zu deren Betrieb bei Netzfehlern mit niedriger Spannung bekannt geworden. Das bekannte Verfahren sieht vor, während eines Netzfehlers mit niedriger Spannung den Ausgangsstrom abhängig von einer in dem System gespeicherten Leistung zu steuern. Der Blatteinstellwinkel wird während des Spannungsrückgangs konstant gehalten.

Aus WO 2008/031434 A2 ist ein Verfahren zur Steuerung einer Windenergieanlage bekannt geworden, bei der im Falle eines Netzfehlers ein oder mehrere Rotorblätter in einem Fehlermodus angesteuert werden, um die Rotordrehzahl in einem vorbestimmten Bereich stabil zu halten.

Aus EP 1 651 865 B1 ist ein Verfahren zur Steuerung einer Windenergieanlage während einer Fehlfunktion im elektrischen Netz bekannt geworden, bei der ein oder mehrere Rotorblätter der Windenergieanlage während des Netzfehlers angesteuert werden, um die Temperatur im Stator und/oder Rotor des Generators unter einer vorbestimmten Maximaltemperatur zu halten.

Aus DE 10 2008 010 543 A1 ist ein Verfahren zum Betreiben einer Windenergieanlage bekannt geworden, bei dem ein Blatteinstellwinkel für das Rotorblatt abhängig von einer Drehzahl eingestellt wird. Durch die Vorgabe eines neuen Blatteinstellwinkels kann die Windenergieanlage für eine schnelle Lastreduzierung auf einen neuen stabilen Arbeitspunkt ohne Netztrennung eingestellt werden.

Aus US 6,921,985 B2 ist ein Verfahren zur Steuerung einer Windenergieanlage bekannt geworden, bei dem ein Netzfehler erkannt wird und ansprechend auf den Netzfehler eine Steuerung des Blatteinstellwinkels erfolgt, wobei während des Netzfehlers die Verstellung des Blatteinstellwinkels von einer unterbrechungsfreien Stromversorgung gespeist wird.

Allgemein ist die Situation bei einer Windenergieanlage derart, dass die Windenergieanlage bei unerwarteten Netzfehlern nicht die maximale Leistung abgeben kann. Der resultierende schnelle Leistungseinbruch der Windenergieanlage führt zunächst zu einem Drehzahlanstieg und nach Beendigung des Netzfehlers zu einem vorübergehenden Drehzahlunterschwinger. Bei einem Netzfehler sinkt die Netzspannung für eine Zeit von mehreren Sekunden so stark ab, dass auch die abgegebene elektrische Wirkleistung der Windenergieanlage entsprechend sinkt, unter Umständen bis auf 0 kW. Die verringerte Last am Triebstrang führt zu einem Drehzahlanstieg. Der Drehzahlregler regelt dann bei herkömmlichen Windenergieanlagen die erhöhte Drehzahl aus. Durch die Regelkreisdynamik kann anschließend ein Drehzahlunterschwinger auftreten. Die zunächst erhöhte Drehzahl belastet die Windenergieanlage und kann außerdem problematisch für einen Umrichter der Windenergieanlage sein.

Bei Netzfehlern mit Spannungseinbrüchen führt der Leistungsabfall dazu, dass die Windenergieanlage nur eine verringerte Leistung in das Netz abgeben kann und die überschüssige Leistung durch eine Erhöhung der Drehzahl in dem Rotor der Windenergieanlage speichert. Nach dem Netzfehler wird dann durch den Leistungsregler aufgrund der höheren Drehzahl eine höhere Leistung abgefordert, als eigentlich im Wind vorhanden ist. Die Drehzahl sinkt dadurch wieder ab. Die im Rotor gespeicherte Energie wird innerhalb einer kurzen Zeitspanne in das Netz abgegeben, was aus Sicht der Netzbetreiber nicht erwünscht ist.

Bei Netzfehlern im Nennlastbetrieb der Windenergieanlage arbeitet diese mit Nenndrehzahl und es erfolgt eine Regelung der Drehzahl und der Leistung durch eine Verstellung des Blatteinstellwinkels. Es kann keine Energie im Rotor gespeichert werden, da eine Regelung für den Blatteinstellwinkel die Drehzahl des Rotors auf die Nenndrehzahl zurückführt. Wenn dann nach Beendigung des Netzfehlers die abgegebene Anlagenleistung wieder hochgefahren wird, bricht die Drehzahl auf Werte unterhalb der Nenndrehzahl ein. Der Leistungsregler reduziert dann gemäß seiner Drehmomenten-Drehzahlkurve die Sollwertvorgabe für die Leistung, um die Anlage in einen stabilen Arbeitspunkt zu überführen. Gleichzeitig reagiert der Blatteinstellregler und versucht die Drehzahl mittels Verstellung des Blatteinstellwinkels wieder auf die Nenndrehzahl zu bringen. Nach Klärung des Netzfehlers tritt daher ein kurzzeitiger Leistungseinbruch auf, der im Hinblick auf die Stabilität des elektrischen Versorgungsnetzes zu vermeiden ist.

Der Erfindung liegt die Aufgabe zugrunde, ein Verfahren zum Betreiben einer Windenergieanlage und eine solche Windenergieanlage bereitzustellen, die es mit einfachen Mitteln erlauben, die Windenergieanlage nach Klärung eines Netzfehlers in einen stabilen Arbeitspunkt zurückzuführen.

Die erfindungsgemäße Aufgabe wird durch ein Verfahren mit den Merkmalen aus den Ansprüchen 1 und 2 gelöst. Ebenso wird die erfindungsgemäße Aufgabe durch eine Windenergieanlage mit den Merkmalen aus den Ansprüchen 9 und 10 gelöst.

Das erfindungsgemäße Verfahren zum Betreiben einer Windenergieanlage ist vorgesehen, um bei Auftreten eines Netzfehlers mit einem Spannungsrückgang die Windenergieanlage nach Klärung des Netzfehlers wieder in einen stabilen Arbeitspunkt zurückzuführen. Die Windenergieanlage weist einen Rotor mit mindestens einem in seinem Blatteinstellwinkel verstellbaren Rotorblatt auf. Ferner besitzt die Windenergieanlage einen mit dem Rotor verbundenen Generator zum Erzeugen einer elektrischen Leistung für ein elektrisches Versorgungsnetz sowie einen mit dem Generator und dem elektrischen Versorgungsnetz verbundenen Umrichter. Das erfindungsgemäße Verfahren besitzt den Verfahrensschritt, einen Netzfehler zu erkennen. Ferner erfolgt ein Erfassen eines aktuellen Werts einer eine Leistung repräsentierenden Größe. Weiterhin erfolgt eine Vorgabe eines Haltesollwerts für die eine Leistung repräsentierende Größe der Windenergieanlage während einer Haltezeit, wobei der Haltesollwert dem aktuellen Wert der eine Leistung repräsentierenden Größe bei Eintreten des Netzfehlers entspricht. Das erfindungsgemäße Verfahren sieht ferner vor, einen maximal zulässigen Sollwert für die eine Leistung repräsentierende Größe der Windenergieanlage zu bestimmen, wobei der maximal zulässige Sollwert nach Ablauf der Haltezeit mit der Zeit vergrößert wird. Die Windenergieanlage wird gemäß einer Sollwertvorgabe angesteuert, die der aktuellen Drehzahl der Windenergieanlage entspricht, wobei die Sollwertvorgabe auf den maximal zulässigen Sollwert begrenzt wird. Das erfindungsgemäße Verfahren beendet die Vorgabe eines maximal zulässigen Sollwerts, sobald der drehzahlabhängige Sollwert kleiner als der maximal zulässige Sollwert ist, danach wird die Windenergieanlage gemäß dem drehzahlabhängigen Sollwert angesteuert. Das erfindungsgemäße Verfahren endet also nach Ablauf der Haltezeit dann, wenn der drehzahlabhängig bestimmte Sollwert der Windenergieanlage unterhalb des maximal zulässigen Sollwerts liegt. Bei dem erfindungsgemäßen Verfahren wird also eine Sollwertvorgabe für die Windenergieanlage innerhalb der Haltezeit eingefroren und nachfolgend, sobald die Windenergieanlage mit einem drehzahlabhängig vorgegebenen Sollwert angesteuert wird, begrenzt. Um nach Beendigung der Haltezeit wieder einen stabilen Arbeitspunkt zu erreichen, wird der Sollwert der Windenergieanlage nachfolgend beschränkt und mit der Zeit langsam freigegeben. Sobald der drehzahlabhängige Sollwert unterhalb des maximal zulässigen Sollwerts liegt, hat die Windenergieanlage wieder einen stabilen Arbeitspunkt erreicht. Zudem wird bei dem erfindungsgemäßen Verfahren eine möglicherweise im Rotor gespeicherte, zusätzliche Energie nicht kurzfristig und plötzlich an das elektrische Versorgungsnetz abgegeben, sondern durch das Anheben des maximal zulässigen Sollwerts erfolgt eine verzögerte Abgabe der gespeicherten Leistung an das elektrische Versorgungsnetz.

Das erfindungsgemäße Verfahren kann gemäß Anspruch 2 ebenfalls mit einem minimal zulässigen Sollwert für die eine Leistung repräsentierende Größe durchgeführt werden. Hierbei wird der minimal zulässige Sollwert bestimmt und nach Ablauf der Haltezeit mit der Zeit vermindert. Die Sollwertbegrenzung erfolgt dann so, dass die der aktuellen Drehzahl entsprechende Sollwertvorgabe auf den minimal zulässigen Sollwert begrenzt wird. Das erfindungsgemäße Verfahren endet, sobald der drehzahlabhängige Sollwert größer als der minimal zulässige Sollwert ist.

Erfindungsgemäß ist ebenfalls vorgesehen, ein Verfahren durchzuführen, bei dem sowohl ein minimal zulässiger Sollwert für die eine Leistung repräsentierende Größe als auch ein maximal zulässiger Sollwert für die eine Leistung repräsentierende Größe bestimmt werden. In diesem Fall definiert der maximal und minimal zulässige Sollwert ein zulässiges Sollwertintervall innerhalb dessen die drehzahlabhängige Sollwertvorgabe für die Ansteuerung der Windenergieanlage liegt.

In einer bevorzugten Ausgestaltung des erfindungsgemäßen Verfahrens erfolgt das Erkennen eines Netzfehlers abhängig von einer oder mehreren der folgenden Größen: Änderung einer Netzspannung, Änderungen einer Netzfrequenz, einer Fehlermeldung von dem Umrichter und einer Fehlermeldung von dem Generator. Insofern als das auf eine Änderung einer elektrischen Größe abgestellt wird, kann bevorzugt ein Schwellwertbereich definiert werden, so dass, wenn die Änderung der elektrischen Größe außerhalb des zulässigen Toleranzintervalls liegt, ein Netzfehler erkannt wird. Bei dem erfindungsgemäßen Verfahren können die elektrischen Größen für eine Erkennung des Netzfehlers an der Windenergieanlage oder am Einspeisepunkt der Windenergieanlage in das elektrische Versorgungsnetz gemessen werden. Alternativ ist es auch möglich, dass diese elektrischen Größen an einer anderen Stelle im elektrischen Versorgungsnetz gemessen und für die Erkennung des Netzfehlers an die Windenergieanlage weitergeleitet werden.

In einer bevorzugten Ausgestaltung ist die eine Leistung repräsentierende Größe ein Istwert oder Sollwert einer zu erzeugenden elektrischen Leistung. Auch kann bei der die Leistung repräsentierenden Größe auf einen Istwert oder Sollwert eines Generatormoments abgestellt werden. Es ist auch möglich, beide Größen miteinander zu verknüpfen, um eine für das erfindungsgemäße Verfahren geeignete Größe zu erhalten.

In einer bevorzugten Ausgestaltung erfolgt ein Regeln des Blatteinstellwinkels während der Haltezeit, um eine dem Haltesollwert entsprechende Drehzahl einzustellen. Mit diesem Merkmal wird während des Auftretens des Netzfehlers durch ein Verstellen des Blatteinstellwinkels versucht, die Windenergieanlage mit einer Drehzahl zu betreiben, die dem eingefrorenen Haltesollwert entspricht. Hierdurch wird nach Beendigung der Haltezeit das Erreichen eines stabilen Arbeitspunkts erleichtert.

In einer bevorzugten Weiterbildung des erfindungsgemäßen Verfahrens erfolgt ein Vergrößern des maximal zulässigen Sollwerts mit einer vorbestimmten ersten Änderungsrate. Der minimal zulässige Sollwert wird bevorzugt mit einer vorbestimmten zweiten Änderungsrate verkleinert. Erste und zweite Änderungsrate können gleich groß gewählt werden.

Das erfindungsgemäße Verfahren sieht ferner vor, dass ein Beenden der Haltezeit vorgenommen wird, wenn die Drehzahl unter einen vorbestimmten Minimalwert für die Drehzahl fällt. Auf diese Weise soll verhindert werden, dass die Drehzahl während der Haltezeit zu stark absinkt, um nach Klärung des Netzfehlers wieder einen stabilen Arbeitspunkt zu erreichen.

In einer bevorzugten Ausgestaltung ist der Wert des minimal zulässigen Sollwerts gleich dem des maximal zulässigen Sollwerts. Hierdurch entsteht bei der Vergrößerung des maximal zulässigen Sollwerts und der Verkleinerung des minimal zulässigen Sollwerts ein Sollwertintervall, das mit einer kleinsten Intervallbreite bei Ablauf der Haltezeit beginnt und sich mit der Zeit vergrößert.

Die erfindungsgemäße Aufgabe wird ebenfalls durch eine Windenergieanlage mit den Merkmalen aus Anspruch 9 gelöst. Die erfindungsgemäße Windenergieanlage besitzt einen Rotor mit mindestens einem in seinem Blatteinstellwinkel verstellbaren Rotorblatt, einem mit dem Rotor verbundenen Generator zum Erzeugen einer elektrischen Leistung für ein elektrisches Versorgungsnetz sowie einen mit dem Rotor und dem elektrischen Versorgungsnetz verbundenen Umrichter. Die erfindungsgemäße Windenergieanlage besitzt eine Netzfehlererkennungseinrichtung, die einen Netzfehler im elektrischen Versorgungsnetz erkennt. Ferner ist die erfindungsgemäße Windenergieanlage mit einer Steuerung ausgestattet, die dem Umrichter und/oder dem Generator während der Haltezeit, ansprechend auf einen erkannten Netzfehler, einen aktuellen Wert einer eine Leistung repräsentierenden Größe als Haltesollwert vorgibt. Die Steuerung gibt ferner nach Ablauf der Haltezeit dem Umrichter und/oder dem Generator einen drehzahlabhängigen Sollwert vor. Die erfindungsgemäße Windenergieanlage besitzt ferner eine Sollwertbegrenzungseinrichtung, die nach Ablauf der Haltezeit den vorgegebenen Sollwert auf einen maximal zulässigen Sollwert begrenzt und den maximal zulässigen Sollwert mit der Zeit vergrößert. Die Sollwertbegrenzungseinrichtung stellt sicher, dass wenn nach Ablauf der Haltezeit ein drehzahlabhängiger Sollwert der Windenergieanlage zur Ansteuerung vorgegeben wird, dessen Wert auf den maximal zulässigen Sollwert begrenzt ist.

Erfindungsgemäß wird die Aufgabe auch durch eine Windenergieanlage mit den Merkmalen aus Anspruch 10 gelöst. Diese Windenergieanlage besitzt ebenfalls einen Rotor mit mindestens einem in seinem Blatteinstellwinkel verstellbaren Rotorblatt, einen mit dem Rotor verbundenen Generator zum Erzeugen einer elektrischen Leistung für ein elektrisches Versorgungsnetz sowie einen mit dem Generator und dem elektrischen Versorgungsnetz verbundenen Umrichter. Die Windenergieanlage besitzt eine Netzfehlererkennungseinrichtung, die einen Netzfehler im elektrischen Versorgungsnetz erkennt. Eine Steuerung gibt dem Umrichter und/oder dem Generator während einer Haltezeit, ansprechend auf einen erkannten Netzfehler, einen aktuellen Wert einer eine Leistung repräsentierenden Größe als Haltesollwert vor. Nach Ablauf der Haltezeit gibt die Steuerung dem Umrichter und/oder dem Generator einen drehzahlabhängigen Sollwert vor. Die erfindungsgemäße Windenergieanlage gemäß Anspruch 10 besitzt eine Sollwertbegrenzungseinrichtung, die nach Ablauf der Haltezeit den vorgegebenen Sollwert auf einen minimal zulässigen Sollwert begrenzt und den minimal zulässigen Sollwert mit der Zeit verkleinert. Diese Sollwertbegrenzungseinrichtung gewährleistet, dass nach Ablauf der Haltezeit, wenn der Windenergieanlage zur Ansteuerung ein drehzahlabhängiger Sollwert vorgegeben wird, dieser nicht kleiner als der minimal zulässige Sollwert ist. Durch die Verkleinerung des minimal zulässigen Sollwerts wird die Windenergieanlage in einen stabilen Arbeitspunkt zurückgeführt.

Neben der Ausgestaltung, bei der die Sollwertbegrenzungseinrichtung einen maximal zulässigen Sollwert ermittelt und diesen mit der Zeit vergrößert und der Ausgestaltung, in der die Sollwertbegrenzungseinrichtung einen minimal zulässigen Sollwert besitzt und diesen mit der Zeit verkleinert, ist erfindungsgemäß auch eine Windenergieanlage vorgesehen, deren Sollwertbegrenzungseinrichtung sowohl einen maximal zulässigen Sollwert als auch einen minimal zulässigen Sollwert besitzt und nach Ablauf der Haltezeit einen von der Steuerung vorgegebenen Sollwert derart begrenzt, dass er in dem Intervall zwischen dem minimal zulässigen Sollwert und dem maximal zulässigen Sollwert liegt. In dieser Ausgestaltung wird nach Ablauf der Haltezeit das Intervall mit der Zeit vergrößert.

Die erfindungsgemäße Windenergieanlage ist ferner mit einer Blatteinstellregelung ausgestattet, die ansprechend auf einen Netzfehler einen Blatteinstellwinkel eines Rotorblatts steuert oder regelt, um eine dem Haltesollwert entsprechende Drehzahl zu erzielen. Der Haltesollwert betrifft einen aktuellen Wert einer eine Leistung repräsentierenden Größe, so dass diese dem Haltesollwert einer Drehzahl entspricht. Es erfolgt in dieser Ausgestaltung also bereits während des Auftretens des Netzfehlers, wenn für die Steuerung der Windenergieanlage der Haltesollwert vorgegeben wird, eine Einstellung des Blatteinstellwinkels entsprechend einer Drehzahl des Rotors, die dem Haltesollwert entspricht.

In einer bevorzugten Ausgestaltung senkt die Sollwertbegrenzungseinrichtung den minimal zulässigen Sollwert mit der Zeit auf Null ab. Ebenso kann die Sollwertbegrenzungseinrichtung den maximal zulässigen Sollwert mit der Zeit auf die Nennleistung der Windenergieanlage oder einen festen Wert oberhalb der Nennleistung erhöhen.

Eine bevorzugte Ausgestaltung der Erfindung wird nachfolgend an einem Beispiel näher erläutert. Es zeigen:
- Fig. 1: den Verlauf der Netzspannung über der Zeit mit einer Zeitmarke vor Eintritt des Netzfehlers,
- Fig. 2: das Generatormoment über der Drehzahl mit dem aktuellen Arbeitspunkt der Windenergieanlage , vor Eintritt des Netzfehlers
- Fig. 3: den Spannungszeitverlauf aus Fig. 1 mit einer Zeitmarke bei Eintritt des Netzfehlers,
- Fig. 4: das Generatormoment abhängig von der Drehzahl, mit dem aktuellen Arbeitspunkt der Windenergieanlage, bei Eintritt des Netzfehlers,
- Fig. 5: den Spannungszeitverlauf aus Fig. 1 mit einer Zeitmarke für einen Zeitpunkt nach Klärung des Netzfehlers,
- Fig. 6: das Generatormoment über der Drehzahl mit dem aktuellen Arbeitspunkt der Windenergieanlage nach Klärung des Netzfehlers,
- Fig. 7: den zeitlichen Verlauf des Istwerts der Drehzahl der Windenergieanlage im Teillastbetrieb, bei Benutzung des erfindungsgemäßen Verfahrens, im Vergleich zu einem herkömmlichen Verfahren,
- Fig. 8: den zeitlichen Verlauf des Sollwerts für das Generatormoment im Teillastbetrieb bei Benutzung des erfindungsgemäßen Verfahrens, im Vergleich zu einem herkömmlichen Verfahren,
- Fig. 9: den zeitlichen Verlauf des Istwerts der im Teillastbetrieb erzeugten Leistung, bei Benutzung des erfindungsgemäßen Verfahrens, im Vergleich zu einem herkömmlichen Verfahren,

- Fig. 10: ein Blockdiagramm zur Regelung der erfindungsgemäßen Windenergieanlage,
- Fig. 11: den zeitlichen Verlauf für den Haltesollwert und die maximal zulässige Leistung,
- Fig.12: den zeitlichen Verlauf für den Haltesollwert und die minimal zulässige Leistung und
- Fig. 13: den zeitlichen Verlauf für den Haltesollwert und die minimal und maximal zulässige Leistung.

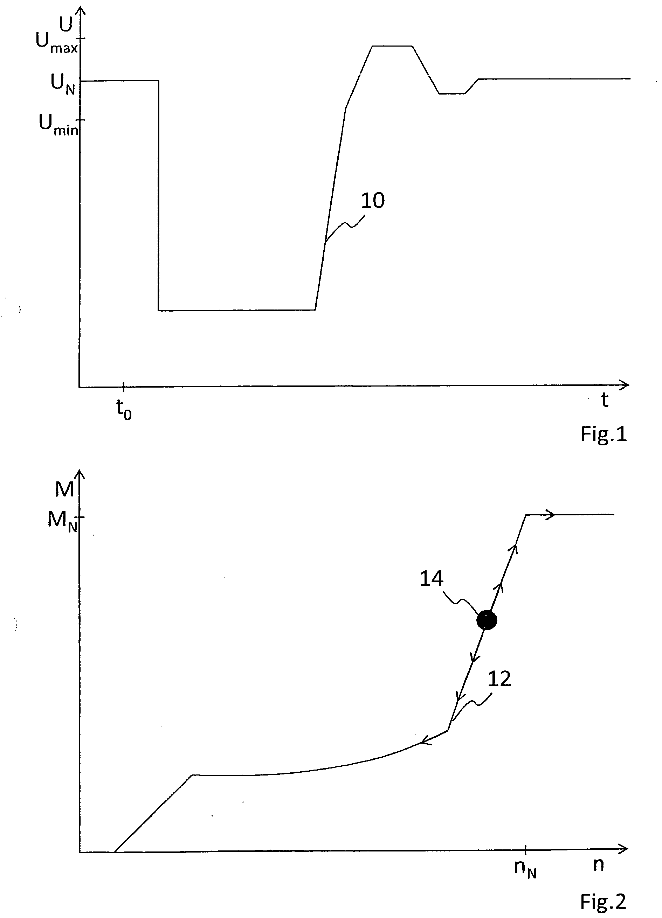

Fig. 1 zeigt einen Verlauf 10 der Netzspannung U über der Zeit t. Bei der Netzspannung U kann es sich um einen resultierenden Effektivwert der dreiphasigen Netzspannung oder der Netzspannung in einer einzelnen Phase handeln. Im Zeitpunkt t₀ liegt im Netz die Nennspannung mit dem Wert U_{N} vor. Zur Verdeutlichung sind in Fig. 1 auch Werte für die maximale Spannung Uₘₐₓ und die minimale Spannung Uₘᵢₙ eingezeichnet. Diese Werte werden dazu herangezogen, das Auftreten eines Netzfehlers bei Unterschreiten bzw. Überschreiten der Spannungsgrenzen zu definieren.

Fig. 2 zeigt eine an sich bekannte Kennlinie für die Steuerung des Generatormoments M abhängig von der Drehzahl n. Die Kennlinie 12 gibt einer Steuerung einer Windenergieanlage abhängig von der Drehzahl einen Sollwert für das einzustellende Generatormoment vor. Das Produkt aus der Drehzahl n und dem Generatormoment M entspricht dem Sollwert für die zu erzeugende bzw. einzuspeisende Leistung P_{S}. Die Verwendung eines drehzahlabhängigen Sollwerts für das Generatormoment erleichtert die Darstellung der Erfindung und macht die zugrunde liegenden physikalischen Zusammenhänge zwischen elektrischer Leistung, mechanischer Leistung und Drehzahl deutlich. In der Steuerung der Windenergieanlage wird der Sollwert für das Generatormoment automatisch in einen Sollwert für die zu erzeugende Leistung umgerechnet, da der angesteuerte Umrichter stets eine elektrische Leistung als Ausgangsgröße besitzt.

Bei dem vorliegenden Arbeitspunkt 14 befindet sich die Anlage im Teillastbereich, in dem der Nennwert für das Generatormoment M_{N} noch nicht erreicht wurde. Dieser Betriebszustand der Windenergieanlage liegt in dem in Fig. 1 gekennzeichneten Zeitpunkt t₀ vor Der Arbeitspunkt 14 befindet sich auf einem steil ansteigenden Ast der Kennlinie der Windenergieanlage, in dem sich das erzeugte Generatormoment unmittelbar vor Erreichen der Nenndrehzahl n_{N} stark erhöht.

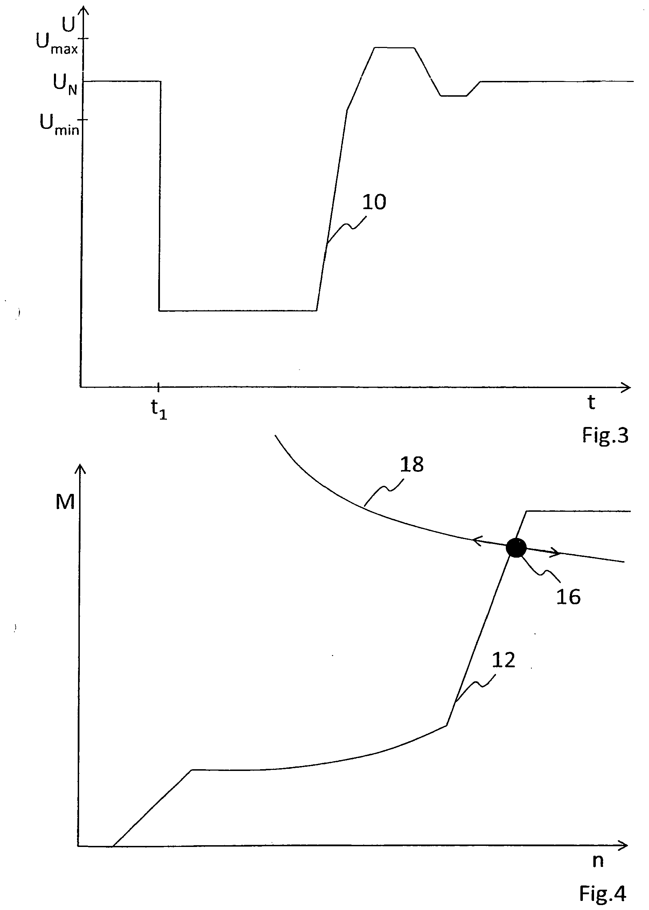

Fig. 3 zeigt den Spannungszeitverlauf 10 aus Fig. 1 mit einer Zeitmarke bei Eintritt des Spannungsfehlers im Zeitpunkt t₁.

Fig. 4 zeigt die Kennlinie 12 aus Fig. 2 für das Generatormoment abhängig von der Drehzahl, wobei der Arbeitspunkt 16 für die Windenergieanlage vorliegt. Bei dem erfindungsgemäßen Verfahren wird bei Eintreten des Netzfehlers, also zum in Fig. 3 gekennzeichneten Zeitpunkt t₁ bzw. unmittelbar danach, der Sollwert für die elektrische Leistung für die Haltezeit eingefroren. Aufgrund des bereits angesprochenen Zusammenhangs zwischen elektrischer Leistung, Drehzahl und Moment folgt bei festgehaltener Leistung, dass der Sollwert für das Generatormoment umgekehrt proportional zur Drehzahl ist. Somit ergibt sich in Fig. 4 die Kennlinie 18, die durch den Arbeitspunkt 16 verläuft und diejenigen Arbeitspunkte der Windenergieanlage beschreibt, in denen der Sollwert, der sich aus dem Produkt des Generatormoments und der Drehzahl ergibt, einer konstanten Leistung entspricht. Würde zum Zeitpunkt des Netzfehlers ein anderer Arbeitspunkt als der in Fig. 4 dargestellte Arbeitspunkt 16 vorliegen, so würde die Kennlinie 18 mit konstanter Leistung entsprechend durch diesen Arbeitspunkt verlaufen.

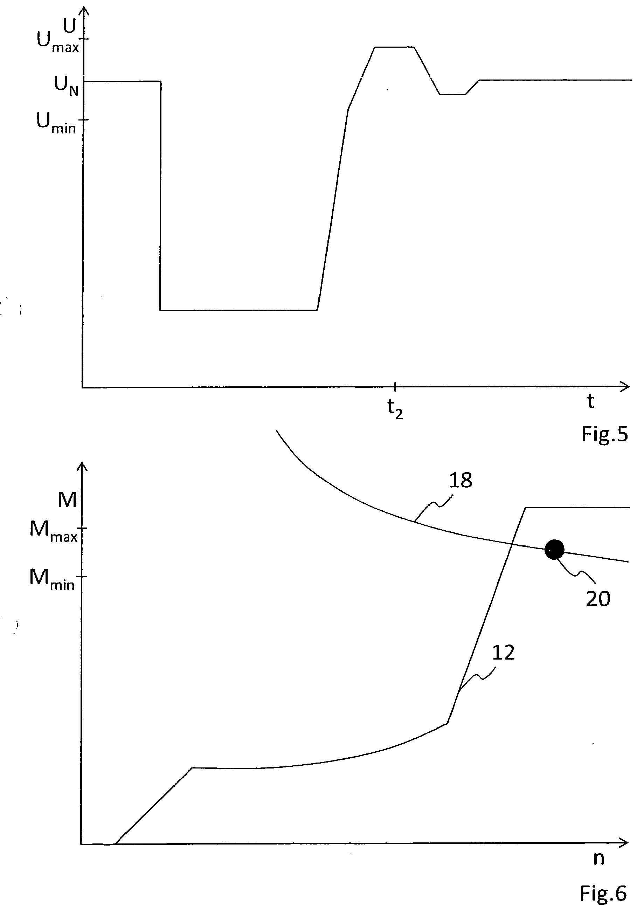

Fig. 5 zeigt die Spannungszeitkennlinie 10 aus Fig. 1 mit einer Markierung des Betrachtungszeitpunkts t₂. Im Zeitpunkt t₂ ist die Netzspannung U bereits zurückgekehrt, es ist also eine Klärung des Netzfehlers erfolgt. Dementsprechend liegt die Netzspannung auch wieder innerhalb des Intervalls zwischen Uₘᵢₙ und Uₘₐₓ.

Fig. 6 zeigt den Arbeitspunkt 20 der Windenergieanlage auf der Kennlinie 18 zum in Fig. 5 gekennzeichneten Zeitpunkt t₂. Um die Windenergieanlage nach einem Netzfehler mit Spannungseinbruch in einen stabilen Arbeitspunkt zurückzuführen, ist es notwendig, den Arbeitspunkt 20 wieder auf die Kennlinie 12 zu verschieben. In dem in Fig. 6 dargestellten Beispiel ist der Drehzahlistwert größer als der durch die Kennlinie 12 vorgegebene Drehzahlsollwert. Um den Arbeitspunkt 20 auf die Kennlinie 12 zurückzuführen, wird der Sollwert für das Generatormoment erhöht und somit automatisch die Drehzahl vermindert, bis der Arbeitspunkt 20 wieder auf der Kennlinie 12 liegt und somit der Sollwert für das Generatormoment wieder drehzahlabhängig vorgegeben wird. Das Zurückführen des Arbeitspunktes 20 auf die Kennlinie 12 wird durch ein maximales Generatormoment Mₘₐₓ und ein minimales Generatormoment Mₘᵢₙ begrenzt. Bei der Erhöhung des Sollwerts für das Generatormoment wird darauf geachtet, dass dieser den Wert Mₘₐₓ nicht überschreitet und den Wert Mₘᵢₙ nicht unterschreitet. In Fig. 6 kann die Sollwertvorgabe für das Generatormoment bis zum Wert Mₘₐₓ erhöht werden, wobei dann nachfolgend eine einstellbare Änderungsgeschwindigkeit für die Erhöhung des maximal zulässigen Sollwerts Mₘₐₓ vorgegeben wird.

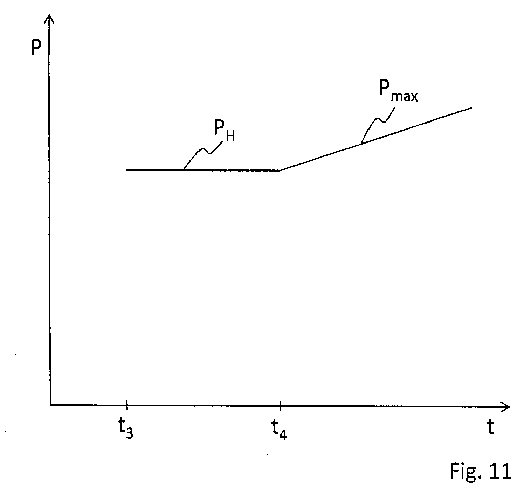

Fign. 11 bis 13 zeigen den Vorgang der Vorgabe eines konstanten Haltesollwerts für die Leistung P_{H} und des Anhebens bzw. Absenkens einer oberen oder unteren Grenze für die Leistung Pₘₐₓ oder Pₘᵢₙ abhängig von der Zeit. In Fig. 11 ist der Sollwert für die elektrische Wirkleistung des Generators P über der Zeit dargestellt. In Fig. 11 sei angenommen, dass der Netzfehler zum Zeitpunkt t₃ eintritt und die Haltezeit erfindungsgemäß bei t₃ beginnt und zum Zeitpunkt t₄ endet. Während des Zeitintervalls t₃, t₄ wird der aktuelle Sollwert für die elektrische Wirkleistung des Generators auf den Wert P_{H} eingefroren. Dieser Wert entspricht dem aktuellen Sollwert für die elektrische Wirkleistung des Generators P im Zeitpunkt t₃. Beginnend mit dem Zeitpunkt t₄ wird ein maximal zulässiger Sollwert definiert und vorgegeben, der sich über der Zeit stetig vergrößert.

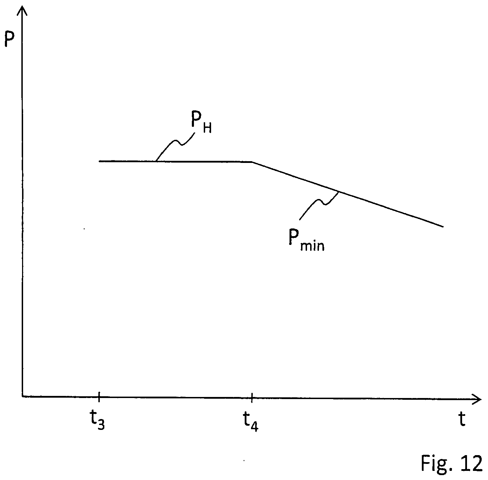

Fig. 12 zeigt eine alternative Ausgestaltung, bei der der Netzfehler zum Zeitpunkt t₃ eintritt und die Haltezeit bei t₃ beginnt und zum Zeitpunkt t₄ endet. Während des Zeitintervalls t₃, t₄ wird der aktuelle Sollwert für die elektrische Wirkleistung auf den Wert P_{H} eingefroren. Dieser Wert entspricht dem aktuellen Sollwert für die elektrische Wirkleistung des Generators P zum Zeitpunkt t₃. Nach Ablauf der Haltezeit, also im Zeitpunkt t₄, wird ein minimal zulässiger Sollwert definiert und vorgegeben, der sich über der Zeit stetig verkleinert.

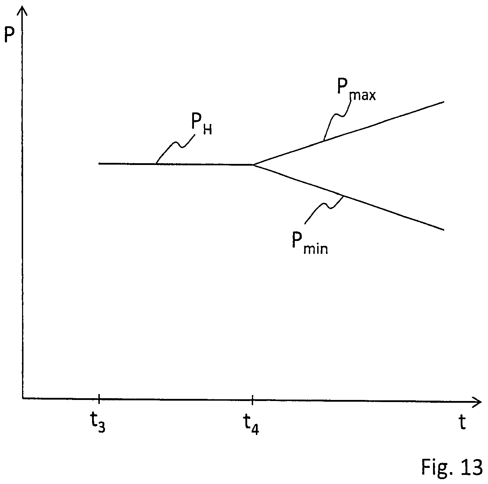

Fig. 13 zeigt eine entsprechende Ausgestaltung, bei der der Netzfehler zum Zeitpunkt t₃ eintritt und die Haltezeit bei t₃ beginnt und zum Zeitpunkt t₄ endet. Nach Ablauf der Haltezeit zum Zeitpunkt 4 werden ein minimal zulässiger Sollwert für die elektrische Wirkleistung Pₘᵢₙ und ein maximal zulässiger Sollwert für die elektrische Wirkleistung Pₘₐₓ definiert und vorgegeben. In dem dargestellten Ausführungsbeispiel besitzen der minimal zulässige Sollwert und der maximal zulässige Sollwert zum Zeitpunkt t₄ einen gleichen Wert, der hier dem Wert der Haltesollwert der elektrischen Wirkleistung P_{H} entspricht. In der Zeit nach dem Zeitpunkt t₄ darf der Sollwert für die elektrische Wirkleistung nur innerhalb der Grenzen zwischen Pₘᵢₙ und Pₘₐₓ liegen. Sollte der drehzahlabhängig vorgegebene Sollwert außerhalb dieser Werte liegen, wird er auf diese Werte begrenzt.

In den Beispielen aus den Fign. 11 bis 13 werden Leistungsgrenzen verwendet. Alternativ ist es auch möglich, statt eines Haltesollwerts und maximal und minimal zulässiger Sollwerte für die Leistung des Generators, auch Momentgrenzen über der Zeit zu definieren, wobei diese ebenfalls die Leistung des Generators bzw. der Windenergieanlage beeinflussen.

Wie aus Fig. 6 ersichtlich, muss der Arbeitspunkt 20 nach einem Netzfehler mit Spannungseinbruch durch eine Änderung des Moments und der Drehzahl auf die Kennlinie 12 zurückgeführt werden, wobei der Arbeitspunkt der Windenergieanlage nicht kontrolliert entlang der Kennlinie 18 geführt werden kann. Entsprechend Fign. 11 bis 13 treten nach dem Zeitpunkt t₄ Leistungsistwerte auf, die von dem Haltesollwert für die zu erzeugende Leistung P_{H} abweichen. Daher wird der vorgegebene Leistungssollwert auf die Werte Pₘₐₓ bzw. Pₘᵢₙ beschränkt.

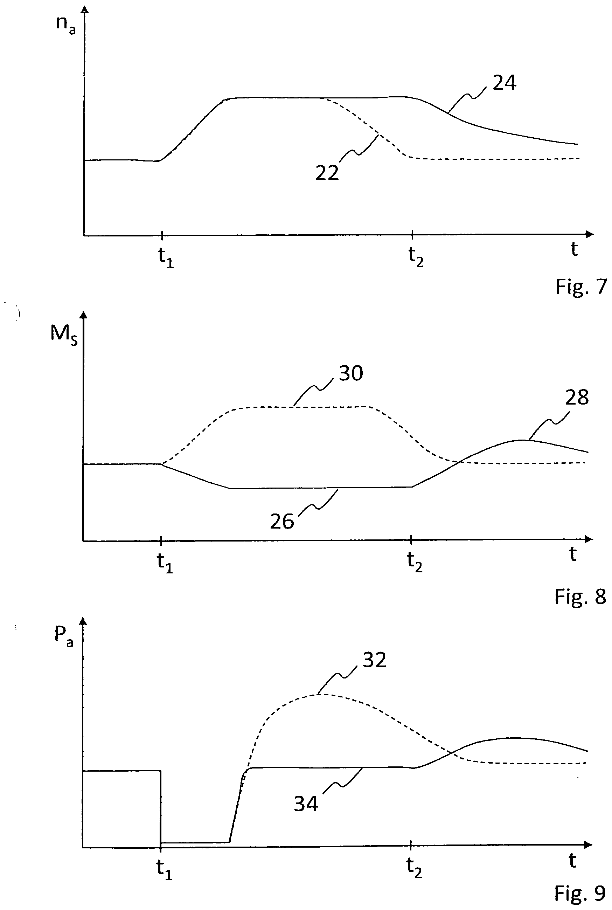

Fig. 7 zeigt den Drehzahlistwert nₐ bei Auftreten eines Netzfehlers, bei einem herkömmlichen Betrieb einer Windenergieanlage, ohne Vorgabe eines Haltesollwerts für die zu erzeugende Leistung P_{H} während des Netzfehlers. Hier folgt der Drehzahlistwert der mit 22 gekennzeichneten Linie. Deutlich zu erkennen ist, dass die Drehzahl nach Eintritt eines Netzfehlers zum Zeitpunkt t₁ ansteigt, nach Klärung des Fehlerfalls schnell wieder abfällt und zum Zeitpunkt t₂ wieder den Wert vor Eintritt des Netzfehlers aufweist. Bei dem erfindungsgemäßen Verfahren steigt der Istwert der Drehzahl mit der Kurve 24 nach Eintreten des Netzfehlers zum Zeitpunkt t₁ ebenfalls an, wird aber deutlich über den Zeitpunkt t₂ hinaus hoch gehalten, da die möglichen Sollwertvorgaben erfindungsgemäß auch nach Beendigung des Netzfehlers begrenzt werden.

Wie aus Fig. 8 ersichtlich, bedeutet dies bezogen auf den Sollwert für das Generatormoment M_{S} 26, dass dieser nach Eintreten des Netzfehlers zunächst absinkt, während des Netzfehlers vermindert bleibt und nach Klärung des Netzfehlers einen leichten Überschwinger 28 zeigt. Das Absenken des Sollwerts für das Generatormoment ergibt sich aus der Forderung nach einer konstanten zu erzeugenden Leistung, wenn man berücksichtigt, dass der Istwert der Drehzahl 24 wie aus Fig. 7 ersichtlich nach Eintreten des Netzfehlers ansteigt.

Bei einem herkömmlichen Betrieb einer Windenergieanlage, bei dem während des Netzfehlers der Leistungswert nicht konstant gehalten wird, steigt der Sollwert für das Generatormoment 30 nach Eintreten des Netzfehlers an und sinkt nach Beendigung des Netzfehlers wieder ab.

Fig. 9 zeigt den Istwert der elektrischen Wirkleistung Pₐ der Windenergieanlage. Vor und während des Netzfehlers zeigen beide Verfahren zwangsläufig den gleichen Verlauf. Erst nach Beendigung des Netzfehlers steigt der Istwert der elektrischen Wirkleistung 32 bei einer herkömmlichen Windenergieanlage deutlich an. Darüber hinaus erfolgt eine schnelle Abgabe der während des Netzfehlers gespeicherten Leistung in das elektrische Versorgungsnetz. Bei dem erfindungsgemäßen Verfahren zeigt der Verlauf 34 des Istwertes der elektrischen Wirkleistung, dass die gespeicherte elektrische Leistung deutlich später und langsamer abgegeben wird.

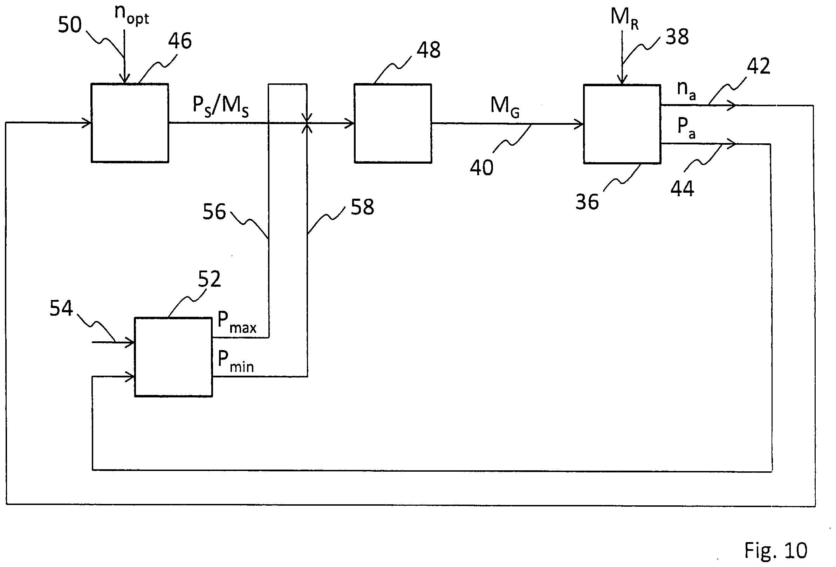

Fig. 10 zeigt ein Funktionsmodell für den Betrieb der Windenergieanlage bei Auftreten eines Netzfehlers. Der Generator 36 erfährt ein Rotormoment M_{R} 38 sowie ein Generatormoment M_{G} 40. Diese beiden Eingangsgrößen zur Erzeugung von elektrischer Leistung für das elektrische Versorgungsnetz werden durch den Generator 36 in die Drehzahl nₐ 42 und eine elektrische Wirkleistung Pₐ 44 umgesetzt. Der Istwert der Drehzahl nₐ 42 liegt an dem Regler 46 der Windenergieanlage an, der einen Sollwert für die elektrische Leistung P_{S} oder das zu erzeugende Generatormoment M_{S} in dem Umrichter 48 anlegt. An dem Regler 46 liegt als zusätzliche Eingangsgröße eine optimale Drehzahl nₒₚₜ 50 an, die einer Drehzahl im Nennlastbetrieb entspricht.

Bei der Erfindung ist eine Sollwertbegrenzungseinrichtung 52 vorgesehen, die nach Ablauf der Haltezeit einen maximal zulässigen Sollwert Pₘₐₓ 56 und einen minimal zulässigen Sollwert Pₘᵢₙ 58 für die zu erzeugende elektrische Wirkleistung vorgibt. An der Sollwertbegrenzungseinrichtung 52 liegt der Istwert der elektrischen Wirkleistung Pₐ 44 an. Erkennt die Sollwertbegrenzungseinrichtung 52 durch ein Signal am Eingang 54, dass ein Netzfehler vorliegt, so wird nach Verstreichen der Haltezeit die Sollwertvorgabe des Reglers 46 auf den Maximalwert bzw. den Minimalwert der elektrischen Wirkleistung Pₘₐₓ bzw. Pₘᵢₙ begrenzt und entsprechend an den Umrichter 48 weitergeleitet.

Das in Fig. 10 schematisch dargestellte Funktionsmodell macht deutlich, dass nach Ablauf der Haltezeit die Regelung der Windenergieanlage durch den Regler 46, den Umrichter 48 und den Generator 36 erfolgt. Die Ausgangsgröße des Reglers 46 , ein Sollwert einer zu erzeugenden elektrischen Leistung P_{S} oder ein zu erzeugendes Generatormoment M_{S}, wird anschließend noch durch die Sollwertbegrenzungseinrichtung 52 beschränkt. Auf diese Weise arbeitet der Regler 46 kontinuierlich nach Beendigung der Haltezeit und wird lediglich in der Zeit, in der maximal und/oder minimal zulässige Sollwerte vorgegeben werden, durch die Sollwertbegrenzungseinrichtung 52 begrenzt. Alternativ ist es auch möglich, dass der P/M Regler auch während der Haltezeit kontinuierlich arbeitet, seine Ausgangswerte dann aber während der Haltezeit, beispielsweise durch die Sollwertbegrenzungseinrichtung, auf den Haltesollwert gesetzt oder zu diesem korrigiert werden.

## Patentansprüche

1. Verfahren zum Betreiben einer Windenergieanlage bei Auftreten eines Netzfehlers mit einem Spannungsrückgang, wobei die Windenergieanlage einen Rotor mit mindestens einem in seinem Blatteinstellwinkel verstellbaren Rotorblatt, einen mit dem Rotor verbundenen Generator zum Erzeugen einer elektrischen Leistung für ein elektrisches Versorgungsnetz sowie einen mit dem Generator und dem elektrischen Versorgungsnetz verbundenen Umrichter aufweist, mit folgenden Verfahrensschritten:
- Erkennen des Netzfehlers,
- Erfassen eines aktuellen Werts einer eine Leistung repräsentierenden Größe der Windenergieanlage,
- Vorgabe eines Haltesollwerts für die eine Leistung repräsentierende Größe der Windenergieanlage während einer Haltezeit, wobei der Haltesollwert dem aktuellen Wert der eine Leistung repräsentierenden Größe bei Eintreten des Netzfehlers entspricht,
- Bestimmen eines maximal zulässigen Sollwerts für die eine Leistung repräsentierende Größe der Windenergieanlage, wobei der maximal zulässige Sollwert nach Ablauf der Haltezeit mit der Zeit vergrößert wird,
- Ansteuern der Windenergieanlage mit einer Sollwertvorgabe, die der aktuellen Drehzahl entspricht, wobei die Sollwertvorgabe auf den maximal zulässigen Sollwert begrenzt wird,
- Beenden einer Vorgabe des maximal zulässigen Sollwerts, sobald der drehzahlabhängige Sollwert kleiner als der maximal zulässige Sollwert ist.

2. Verfahren, insbesondere nach Anspruch 1, zum Betreiben einer Windenergieanlage bei Auftreten eines Netzfehlers mit einem Spannungsrückgang, wobei die Windenergieanlage einen Rotor mit mindestens einem in seinem Blatteinstellwinkel verstellbaren Rotorblatt, einen mit dem Rotor verbundenen Generator zum Erzeugen einer elektrischen Leistung für ein elektrisches Versorgungsnetz sowie einen mit dem Generator und dem elektrischen Versorgungsnetz verbundenen Umrichter aufweist, mit folgenden Verfahrensschritten:
- Erkennen des Netzfehlers,
- Erfassen eines aktuellen Werts einer eine Leistung repräsentierenden Größe der Windenergieanlage,
- Vorgabe eines Haltesollwerts für die eine Leistung repräsentierende Größe der Windenergieanlage während einer Haltezeit, wobei der Haltesollwert dem aktuellen Wert der eine Leistung repräsentierenden Größe bei Eintreten des Netzfehlers entspricht,
- Bestimmen eines minimal zulässigen Sollwerts für die eine Leistung repräsentierende Größe der Windenergieanlage, wobei der minimal zulässige Sollwert nach Ablauf der Haltezeit mit der Zeit vermindert wird,
- Ansteuern der Windenergieanlage mit einer Sollwertvorgabe, die der aktuellen Drehzahl entspricht, wobei die Sollwertvorgabe auf den minimal zulässigen Sollwert begrenzt wird,
- Beenden einer Vorgabe des minimal zulässigen Sollwerts, sobald der drehzahlabhängige Sollwert größer als der minimal zulässige Sollwert ist.

3. Verfahren nach Anspruch 1 oder 2, **dadurch gekennzeichnet, dass** das Erkennen des Netzfehlers abhängig von einer oder einer Kombination mehrerer der folgenden Größen erfolgt: Änderung einer Netzspannung (ΔU), Änderung einer Netzfrequenz (Δf), einer Fehlermeldung von dem Umrichter und einer Fehlermeldung von dem Generator.

4. Verfahren nach einem der Ansprüche 1 bis 3, **dadurch gekennzeichnet, dass** die eine die Leistung repräsentierende Größe der Windenergieanlage einer der folgenden Größen oder einer Kombination mehrerer der folgenden Größen entspricht: ein Istwert einer zu erzeugenden elektrischen Leistung, ein Sollwert einer zu erzeugenden elektrischen Leistung, ein Istwert eines Generatormoments und ein Sollwert eines Generatormoments.

5. Verfahren nach einem der Ansprüche 1 bis 4, **gekennzeichnet durch**:
- Regeln eines Blatteinstellwinkels während der Haltezeit, um eine dem Haltesollwert entsprechende Drehzahl einzustellen.

6. Verfahren nach einem der Ansprüche 1 bis 5, **dadurch gekennzeichnet, dass**
- wenn ein maximal zulässiger Sollwert vorliegt, das Vergrößern des maximal zulässigen Sollwerts mit einer vorbestimmten ersten Änderungsrate erfolgt, und
- wenn ein minimal zulässiger Sollwert vorliegt, das Verkleinern des minimal zulässigen Sollwerts mit einer vorbestimmten zweiten Änderungsrate erfolgt.

7. Verfahren nach einem der Ansprüche 1 bis 6, **gekennzeichnet durch**:
- Beenden der Haltezeit, wenn die Drehzahl unter einen vorbestimmten Minimalwert für die Drehzahl fällt.

8. Verfahren nach einem der Ansprüche 1 bis 7, **dadurch gekennzeichnet, dass** der Wert des maximal zulässigen Sollwerts nach Ablauf der Haltezeit dem Wert des minimal zulässigen Sollwerts entspricht.

9. Windenergieanlage, die einen Rotor mit mindestens einem in seinem Blatteinstellwinkel verstellbaren Rotorblatt, einen mit dem Rotor verbundenen Generator zum Erzeugen einer elektrischen Leistung für ein elektrisches Versorgungsnetz sowie einen mit dem Generator und dem elektrischen Versorgungsnetz verbundenen Umrichter aufweist, **gekennzeichnet durch**:
- eine Netzfehlererkennungseinrichtung, die einen Netzfehler im elektrischen Versorgungsnetz erkennt,
- eine Steuerung, die dem Umrichter und/oder dem Generator während einer Haltezeit ansprechend auf einen erkannten Netzfehler einen aktuellen Wert einer eine Leistung repräsentierenden Größe als Haltesollwert vorgibt und die nach Ablauf der Haltezeit einen drehzahlabhängigen Sollwert vorgibt, und
- eine Sollwertbegrenzungseinrichtung, die nach Ablauf der Haltezeit den vorgegebenen Sollwert auf einen maximal zulässigen Sollwert begrenzt und den maximal zulässigen Sollwert mit der Zeit vergrößert.

10. Windenergieanlage, insbesondere nach Anspruch 9, die einen Rotor mit mindestens einem in seinem Blatteinstellwinkel verstellbaren Rotorblatt, einen mit dem Rotor verbundenen Generator zum Erzeugen einer elektrischen Leistung für ein elektrisches Versorgungsnetz sowie einen mit dem Generator und dem elektrischen Versorgungsnetz verbundenen Umrichter aufweist, **gekennzeichnet durch**:
- eine Netzfehlererkennungseinrichtung, die einen Netzfehler im elektrischen Versorgungsnetz erkennt,
- eine Steuerung, die dem Umrichter und/oder dem Generator während einer Haltezeit ansprechend auf einen erkannten Netzfehler einen aktuellen Wert einer eine Leistung repräsentierenden Größe als Haltesollwert vorgibt und die nach Ablauf der Haltezeit einen drehzahlabhängigen Sollwert vorgibt, und
- eine Sollwertbegrenzungseinrichtung, die nach Ablauf der Haltezeit den vorgegebenen Sollwert auf einen minimal zulässigen Sollwert begrenzt und den minimal zulässigen Sollwert mit der Zeit verkleinert.

11. Windenergieanlage nach Anspruch 9 oder 10, **dadurch gekennzeichnet, dass** eine Blatteinstellregelung ansprechend auf einen Netzfehler einen Blatteinstellwinkel eines Rotorblatts steuert oder regelt, um eine dem Haltesollwert entsprechende Drehzahl zu erzielen.

12. Windenergieanlage nach einem der Ansprüche 10 oder 11, **dadurch gekennzeichnet, dass** die Sollwertbegrenzungseinrichtung den minimal zulässigen Sollwert mit der Zeit auf Null absenkt.

13. Windenergieanlage nach einem der Ansprüche 9 bis 12, **dadurch gekennzeichnet, dass** die Sollwertbegrenzungseinrichtung den maximal zulässigen Sollwert mit der Zeit auf die Nennleistung oder einen vorbestimmten Wert größer als die Nennleistung der Windenergieanlage erhöht.

14. Windenergieanlage nach Anspruch 9 bis 13, **dadurch gekennzeichnet, dass** die Netzfehlererkennungseinrichtung mit dem elektrischen Versorgungsnetz verbundene Messmittel aufweist, um eine Änderung einer Netzspannung und/oder eine Änderung einer Netzfrequenz zu erfassen.

15. Windenergieanlage nach Anspruch 9 bis 14, **dadurch gekennzeichnet, dass** die Netzfehlererkennungseinrichtung auf eine Fehlermeldung des Umrichters und/oder des Generators anspricht.

## Claims

1. A method of operating a wind turbine in case of a grid failure with a voltage decrease, wherein the wind turbine has a rotor with at least one rotor blade adjustable in its blade pitch angle, a generator connected to the rotor for generating electrical power for an electrical supply network and an inverter connected to the generator and to the electrical supply network, with the following procedural steps:
• recognising the grid failure,
• capturing an actual value of a variable of the wind turbine representing a power,
• presetting a hold setpoint for the variable of the wind turbine representing a power during a holding time, wherein the hold setpoint matches the actual value of the variable representing a power when the grid failure occurs,
• determining a maximum admissible setpoint for the variable of the wind turbine representing a power, wherein the maximum admissible setpoint is gradually increased after the expiration of the holding time,
• controlling the wind turbine with a setpoint selection which matches the actual rotational speed, wherein the setpoint selection is limited to the maximum admissible setpoint,
• ending a selection of the maximum admissible setpoint as soon as the rotational speed dependent setpoint is smaller than the maximum admissible setpoint.

2. A method, in particular according to claim 1, of operating a wind turbine in case of a grid failure with a voltage decrease, wherein the wind turbine has a rotor with at least one rotor blade adjustable in its blade pitch angle, a generator connected to the rotor for generating electrical power for an electrical supply network and an inverter connected to the generator and the electrical supply network, with the following procedural steps:
• recognising the grid failure,
• capturing an actual value of a variable of the wind turbine representing a power,
• presetting a hold setpoint for the variable of the wind turbine representing a power during a holding time, wherein the hold setpoint matches the actual value of the variable representing a power when the grid failure occurs,
• determining a minimum admissible setpoint for the variable of the wind turbine representing a power, wherein the minimum admissible setpoint is gradually decreased after the expiration of the holding time,
• controlling the wind turbine with a setpoint selection which matches the actual rotational speed, wherein the setpoint selection is limited to the minimum admissible setpoint,
• ending a selection of the minimum admissible setpoint as soon as the rotational speed dependent setpoint is greater than the minimum admissible setpoint.

3. A method according to claim 1 or 2, **characterised in that** the recognition of the grid failure takes place depending on one or of a combination of several of the following variables: change of a grid voltage (ΔU), change of a grid frequency (Δf), an error message from the inverter and an error message from the generator.

4. A method according to any one of the claims 1 to 3, **characterised in that** the variable of the wind turbine representing a power matches one of the following variables or a combination of several of the following variables: an actual value of an electrical power to be generated, a setpoint of an electrical power to be generated, an actual value of a generator torque and a setpoint of a generator torque.

5. A method according to any one of the claims 1 to 4, **characterised by**:
• controlling a blade pitch angle during the holding time in order to adjust a rotational speed matching the hold setpoint.

6. A method according to any one of the claims 1 to 5, **characterised in that**
• when a maximum admissible setpoint is existent, the increase of the maximum admissible setpoint is performed with a predetermined first rate of change, and
• when a minimum admissible setpoint is existent, the decrease of the minimum admissible setpoint is performed with a predetermined second rate of change.

7. A method according to any one of the claims 1 to 6, **characterised by**:
• ending the holding time when the rotational speed falls below a predetermined minimum value for the rotational speed.

8. A method according to any one of the claims 1 to 7, **characterised in that** the value of the maximum permissible setpoint matches the value of the minimum permissible setpoint after the expiration of the holding time.

9. A wind turbine which has a rotor with at least one rotor blade adjustable in its blade pitch angle, a generator connected to the rotor for generating electrical power for an electrical supply network and an inverter connected to the generator and the electrical supply network, **characterised by**:
• a grid failure recognition device, which recognises a grid failure in the electrical supply network,
• a control device, which presets an actual value of a variable representing the power as holding setpoint to the inverter and/or the generator during a holding time in response to a recognised grid failure, and which presets a rotational speed dependent setpoint after the expiration of the holding time, and
• a setpoint limiting device, which limits the preset setpoint to a maximum permissible setpoint after the expiration of the holding time, and gradually increases the maximum admissible setpoint.

10. A wind turbine, in particular according to claim 9, which has a rotor with at least one rotor blade adjustable in its blade pitch angle, a generator connected to the rotor for generating electrical power for an electrical supply network and an inverter connected to the generator and the electrical supply network, **characterised by**:
• a grid failure recognition device, which recognises a grid failure in the electrical supply network,
• a control device, which presets an actual value of a variable representing the power as holding setpoint to the inverter and/or the generator during a holding time in response to a recognised grid failure, and which presets a rotational speed dependent setpoint after the expiration of the holding time, and
• a setpoint limiting device, which limits the preset setpoint to a minimum permissible setpoint after the expiration of the holding time, and gradually decreases the minimum admissible setpoint.

11. A wind turbine according to claim 9 or 10, **characterised in that** a blade pitch control controls, by means of open-loop or closed-loop control, a blade pitch angle of a rotor blade in response to a grid failure in order to obtain rotational speed matching the holding setpoint.

12. A wind turbine according to one of the claims 10 or 11, **characterised in that** the setpoint limiting device gradually decreases the minimum admissible setpoint to zero.

13. A wind turbine according to any one of the claims 9 to 12, **characterised in that** the setpoint limiting device gradually increases the maximum admissible setpoint to the rated power or to a predetermined value greater than the rated power of the wind turbine.

14. A wind turbine according to any one of the claims 9 to 14, **characterised in that** the grid failure recognition device has measurement devices connected to he electric supply grid in order to capture a change of the grid voltage and/or a change of the grid frequency.

15. A wind turbine according to any one of the claims 9 to 14, **characterised in that** the grid failure recognition device responds to an error message of the inverter and/or of the generator.

## Revendications

1. Procédé d'opération d'une éolienne en cas d'une défaillance du réseau accompagnée d'une baisse de tension, l'éolienne ayant un rotor avec au moins une pale de rotor ajustable en son pas de pale, un générateur accouplé au rotor pour générer une puissance électrique pour un réseau d'alimentation électrique et aussi bien un variateur relié au générateur et au réseau d'alimentation électrique, avec les étapes du procédé suivantes:
• percevoir la défaillance du réseau,
• saisir une valeur actuelle d'une variable de l'éolienne représentant une puissance,
• définir une consigne de maintien pour la variable de l'éolienne représentant une puissance pendant un temps de maintien, la consigne de maintien étant équivalente à la valeur actuelle de la variable de l'éolienne représentant une puissance quand la défaillance du réseau a lieu,
• assigner une consigne maximale admissible pour la variable de l'éolienne représentant une puissance, la consigne maximale admissible étant progressivement augmentée après l'expiration du temps de maintien,
• commander l'éolienne avec une consigne donnée qui est équivalente à la vitesse de rotation actuelle, la consigne donnée étant limitée à la consigne maximale admissible,
• finir la définition de la consigne maximale admissible aussitôt que la consigne en fonction de la vitesse de rotation est moins grande que la consigne maximale admissible.

2. Procédé, notamment selon la revendication 1, d'opération d'une éolienne en cas d'une défaillance du réseau accompagnée d'une baisse de tension, l'éolienne ayant un rotor avec au moins une pale de rotor ajustable en son pas de pale, un générateur accouplé au rotor pour générer une puissance électrique pour un réseau d'alimentation électrique et aussi bien un variateur relié au générateur et au réseau d'alimentation électrique, avec les étapes du procédé suivantes:
• percevoir la défaillance du réseau,
• saisir une valeur actuelle d'une variable de l'éolienne représentant une puissance,
• définir une consigne de maintien pour la variable de l'éolienne représentant une puissance pendant un temps de maintien, la consigne de maintien étant équivalente à la valeur actuelle de la variable de l'éolienne représentant une puissance quand la défaillance du réseau a lieu,
• assigner une consigne minimale admissible pour la variable de l'éolienne représentant une puissance, la consigne minimale admissible étant progressivement diminuée après l'expiration du temps de maintien,
• commander l'éolienne avec une consigne donnée qui est équivalente à la vitesse de rotation actuelle, la consigne donnée étant limitée à la consigne minimale admissible,
• finir la définition de la consigne minimale admissible aussitôt que la consigne en fonction de la vitesse de rotation est plus grande que la consigne minimale admissible.

3. Procédé selon la revendication 1 ou 2, **caractérisé en ce que** la perception de la défaillance du réseau prend place en fonction d'une des variables suivantes ou d'une combinaison de plusieurs des variables suivantes: changement d'une tension du réseau (ΔU), changement d'une fréquence du réseau (Δf), un message d'erreur du variateur et un message d'erreur du générateur.

4. Procédé selon l'une quelconque des revendications 1 à 3, **caractérisé en ce que** la variable de l'éolienne représentant une puissance est équivalente à une des variables suivantes ou d'une combinaison de plusieurs des variables suivantes: une valeur actuelle d'une puissance électrique à générer, une consigne du une puissance électrique à générer, une valeur actuelle d'un couple du générateur et une consigne d'un couple du générateur.

5. Procédé selon l'une quelconque des revendications 1 à 4, **caractérisé par**:
• régler un pas de pale pendant le temps de maintien afin d'ajuster une vitesse de rotation équivalente à la consigne de maintien.

6. Procédé selon l'une quelconque des revendications 1 à 5, **caractérisé en ce que**
• quand une consigne maximale admissible existe, l'augmentation de la consigne maximale admissible est faite avec un premier taux de changement prédéterminé, et
• quand une consigne minimale admissible existe, la diminution de la consigne minimale admissible est faite avec un deuxième taux de changement prédéterminé.

7. Procédé selon l'une quelconque des revendications 1 à 6, **caractérisé par**:
• finir le temps de maintien quand la vitesse de rotation n'atteint plus une valeur minimale prédéterminée pour la vitesse de rotation.

8. Procédé selon l'une quelconque des revendications 1 à 7, **caractérisé en ce que** la valeur maximale admissible de la consigne après l'expiration du temps de maintien est équivalente à la valeur minimale permissible de la consigne.

9. Eolienne qui a un rotor avec au moins une pale de rotor ajustable en son pas de pale, un générateur accouplé au rotor pour générer une puissance électrique pour un réseau d'alimentation électrique et aussi bien un variateur relié au générateur et au réseau d'alimentation électrique, **caractérisée par**:
• un dispositif pour la perception d'une défaillance du réseau, qui perçoit une défaillance du réseau dans le réseau d'alimentation électrique,
• un dispositif de commande, qui prescrit une valeur actuelle d'une variable représentant une puissance comme une consigne de maintien au variateur et/ou au générateur pendant le temps de maintien en réponse à une défaillance du réseau perçue, et prescrit une consigne en fonction de la vitesse de rotation après l'expiration du temps de maintien, et
• un dispositif de limitation de la consigne, qui limite la consigne prescrite à une consigne maximale admissible après l'expiration du temps de maintien, et progressivement augmente la consigne maximale admissible.

10. Eolienne, notamment selon la revendication 9, qui a un rotor avec au moins une pale de rotor ajustable en son pas de pale, un générateur accouplé au rotor pour générer une puissance électrique pour un réseau d'alimentation électrique et aussi bien un variateur relié au générateur et au réseau d'alimentation électrique, **caractérisée par**:
• un dispositif pour la perception d'une défaillance du réseau, qui perçoit une défaillance du réseau dans le réseau d'alimentation électrique,
• un dispositif de commande, qui prescrit une valeur actuelle d'une variable représentant une puissance comme une consigne de maintien au variateur et/ou au générateur pendant le temps de maintien en réponse à une défaillance du réseau perçue, et prescrit une consigne en fonction de la vitesse de rotation après l'expiration du temps de maintien, et
• un dispositif de limitation de la consigne, qui limite la consigne prescrite à une consigne minimale admissible après l'expiration du temps de maintien, et progressivement diminue la consigne minimale admissible.

11. Eolienne selon la revendication 9 ou 10, **caractérisée en ce qu'**un dispositif de régulation du pas de pale commande ou règle un pas de pale d'une pale de rotor en réponse à une défaillance du réseau afin d'obtenir une vitesse de rotation équivalente à la consigne de maintien.

12. Eolienne selon une des revendications 10 ou 11, **caractérisée en ce que** le dispositif de limitation de la consigne progressivement abaisse la consigne minimale admissible à zéro.

13. Eolienne selon l'une quelconque des revendications 9 à 12, **caractérisée en ce que** le dispositif de limitation de la consigne progressivement augmente la consigne maximale admissible à la puissance assignée ou à une valeur prédéterminée plus grande que la puissance assignéede l'éolienne.

14. Eolienne selon l'une quelconque des revendications 9 à 14, **caractérisée en ce que** le dispositif pour la perception d'une défaillance du réseau a des moyens de mesure reliés au réseau d'alimentation électrique afin de capturer un changement de la tension du réseau et/ou un changement de la fréquence du réseau.

15. Eolienne selon l'une quelconque des revendications 9 à 14, **caractérisée en ce que** le dispositif pour la perception d'une défaillance du réseau répond à un message d'erreur du variateur et/ou du générateur.
